# EUROPÄISCHE PATENTSCHRIFT

(11) **EP 1 268 035 B1**
(45) Veröffentlichungstag und Bekanntmachung des Hinweises auf die Patenterteilung: **07.04.2004**
(21) Anmeldenummer: 02711866.0
(22) Anmeldetag: 14.02.2002
(51) Int. Cl.: B01D 37/04

(54) **VERFAHREN UND VORRICHTUNG ZUM FILTRIEREN VON FLÜSSIGKEITEN, INSBESONDERE GETRÄNKEN**
METHOD AND DEVICE FOR FILTERING LIQUIDS, ESPECIALLY DRINKS
PROCEDE ET DISPOSITIF POUR FILTRER DES LIQUIDES, NOTAMMENT DES BOISSONS

(30) Priorität: 19.02.2001 DE 10108957
(43) Veröffentlichungstag der Anmeldung: 02.01.2003
(73) Patentinhaber: E. Begerow GmbH & Co., D-55450 Langenlonsheim (DE)
(72) Erfinder: BRETT, Elke, 65366 Geisenheim (DE); HEINEMEYER, Carsten, 65366 Johannisberg (DE); TESCH, Ralf, 55131 Mainz (DE)
(74) Vertreter: Bartels, Martin Erich Arthur
(86) Internationale Anmeldenummer: PCT/EP2002/001540
(87) Internationale Veröffentlichungsnummer: WO 2002/066140

(56) Entgegenhaltungen:
- WO-A-99/32206
- DE-A- 19 607 740
- DE-U- 29 604 290
- PATENT ABSTRACTS OF JAPAN vol. 017, no. 321 (C-1072), 18. Juni 1993 (1993-06-18) & JP 05 031308 A (HITACHI CABLE LTD), 9. Februar 1993 (1993-02-09)

## Beschreibung

Die Erfindung betrifft ein Verfahren und eine Vorrichtung zum Filtrieren von Flüssigkeiten, insbesondere Getränken. Die Filtriervorrichtung weist mindestens zwei Filterlinien mit jeweils mindestens einer Filtereinheit auf. Das Verfahren und die Vorrichtung sind insbesondere bei der Herstellung von mindestens teilweise vergorenen Fruchtsäften, insbesondere Wein, einsetzbar.

Bei der Herstellung von Wein und Fruchtsaft ist es in verschiedenen Verfahrensschritten notwendig, Fest/Flüssig-Trennoperationen durchzuführen. Dies kann durch klassische Trennverfahren, wie Sedimentation, Zentrifugation, Kuchenfiltration usw. erfolgen, oder durch die sog. "Cross-Flow-Filtration", oder zu deutsch "Querstromfiltration", wie sie in der Publikation Karbachsch M., Pototschnigg S. und Bauer R.: Einsatz der Cross-Flow-Filtration in der Getränkeindustrie, Kellerwirtschaft, beschrieben ist. Diese Art der Filtration ist im Gegensatz zur sog. "statischen Filtration" ("Dead-End-Filtration") dadurch ausgezeichnet, daß die Membranoberfläche mit einem quer zur Filtrationsrichtung wirksamen Schubspannungsgradienten tangential überströmt wird. Dadurch wird die Bildung einer Deckschicht an der Membranoberfläche zurückgedrängt bzw. minimiert. Nachteilig bei der Cross-Flow-Filtration ist, daß die Art der abzuscheidenden Partikel nicht zu beeinflussen ist und daß die zu filtrierende Flüssigkeit so lange umgepumpt werden muß, bis ein Durchtritt durch die Membran erfolgt. Die damit verbundene mechanische und/oder thermische Belastung der zu filtrierenden Flüssigkeit führt häufig zu Qualitätsverlusten.

Zur Vorfiltration wird im Stand der Technik häufig die sog. Kieselgurfiltration eingesetzt. Selbst beim Einsatz von mittelfeiner oder feiner Kieselgur ist eine hefefreie Filtration nur mit großem Aufwand erreichbar. Darüber hinaus muß die eingesetzte Kieselgur nach einer unter anderem von der Partikelbelastung der zu filtrierenden Flüssigkeit abhängigen Betriebszeit ausgetauscht und die verbrauchte Kieselgur entsorgt werden.

Um beim Reinigen eines Filters oder sonstigen Wartungsarbeiten den Filtrierbetrieb aufrechterhalten zu können, werden häufig sog. Stand-By-Filterlinien vorgehalten, die erst dann zugeschaltet werden, wenn eine in Betrieb befindliche Filterlinie abgeschaltet werden muß. Dies führt dazu, daß ein erheblicher Teil der Filtriervorrichtung, nämlich die Elemente der Stand-By-Linie, zwar bereitgestellt werden müssen, aber zum größten Teil nicht im Betrieb sind. Dadurch erhöhen sich die Investitions-, Betriebs- und auch die Wartungskosten der Filtriervorrichtung.

Durch die DE-A-196 07 740 A1 ist eine Filtrationsanlage bekannt mit einer Vorfilterstufe, bestehend aus drei Vorfiltergehäusen und einer Endfilterstufe, bestehend aus zwei Endfiltergehäusen, wobei die Endfilterstufe in Reihe der Vorfilterstufe als jeweilige Baueinheit nachgeschaltet ist. Jedes der genannten Gehäuse verfügt über eine Differenz-Druckmeßeinrichtung, mit der jeweils der Differenzdruck zwischen dem Gehäuseeingang und dem Gehäuseausgang ermittelt wird. Der dazugehörige "Flux" wird mit dem Volumenstrommeßgerät bestimmt, das gleichzeitig als Volumenzählgerät dient und in der Filtratsammelleitung angeordnet ist. Im üblichen Filtrationsbetrieb filtriert immer nur ein Vorfiltergehäuse zusammen mit einem Endfiltergehäuse in Linie, wobei jede mögliche Kombination denkbar ist, d.h. die Vorfilterlinien und die Endfilterlinien werden zwar nach dem gleichen Prinzip, aber getrennt voneinander und mit anderen Grenzwerten gesteuert. Eine dahingehende Anlage wird regelmäßig zur Kalkentkeimung von Bier od. dgl. eingesetzt. Ein Betrieb der Anlage, bei der nebeneinander mehrere Vorfilterstufen und Endfilterstufen gleichzeitig eingesetzt sind, ist mit der bekannten Lösung nicht möglich, was deren Leistungsfähigkeit entsprechend einschränkt. Sofern eine Regenerierung eines Vorfilters oder eines Endfilters stattfindet, verbleibt in der Filterlinie immer nur ein Vorfilter und ein Endfilter, die für den Filtrationsprozeß zur Verfügung stehen, was mit zu der sehr geringen Effizienz der bekannten Anlage beiträgt.

Des weiteren wird die bekannte Filtrationsanlage mit einem konstanten Volumenstrom gefahren, was zu einem Verblocken des entsprechenden Vor- oder Endfilters führen kann, sofern der jeweils andere Filter gewollt oder ungewollt, beispielsweise auch durch Verschmutzung, aus dem Filtrationsprozeß herausgenommen ist oder unbrauchbar wird.

Durch die DE-A-37 00 804 ist ein Verfahren und eine Anlage bekannt zum Konzentrieren von in dispersen oder kolloidalen Lösungen befindlichen Substanzen aus einem stark verdünnten Ausgangsprodukt durch Ultrafiltration, insbesondere zur Wirkstoffgewinnung im medizinischen oder pharmazeutischen Bereich. Mit Hilfe eines Steuergerätes wird nach Vorwahl der Parameter Eingangsdruck und Druckdifferenz während eines Ultrafiltrationsprogrammes die Druckdifferenz über die Filterelemente durch Beeinflussung des Förderstromes der Pumpe und durch Beeinflussung des Gegendruckes mit Hilfe einer Drossel konstant gehalten. Damit wird über das gesamte Programm trotz der sich ändernden Viskosität des zu filternden Gutes ein optimales Filtrierungsergebnis erreicht. Mit der bekannten Lösung ist also die Reduktion von Volumenströmen in Abhängigkeit vom Differenzdruck bei Ultrafiltrationsanlagen bekannt, bei denen jeweils eine Batterie von Filterelementen, die in Reihe parallel zueinander verschaltet sind, das Unfiltrat aus einem gemeinsamen Vorratsbehälter entnehmen und im Gleichlaufbetrieb das Filtrat an eine gemeinsame Sammelstelle kontinuierlich während des Betriebes weiterleiten. Eine Regenerierung von einzelnen Filterelementen bei diesem Verfahren ist nicht vorgesehen.

Ausgehend von diesem Stand der Technik liegt der Erfindung die Aufgabe zugrunde, ein Verfahren und eine Vorrichtung zum Filtrieren von Flüssigkeiten, insbesondere Getränken, bereitzustellen, welche die beschriebenen Nachteile des Standes der Technik überwinden. Insbesondere soll mit möglichst geringem Investitions-, Betriebs- und Wartungsaufwand eine nach Möglichkeit vollautomatisch arbeitende Filtriervorrichtung bereitgestellt werden, die mit hoher Effizienz ein qualitativ möglichst hochwertiges und im Fall der Weinfiltration insbesondere hefefreies Filtrat ergibt.

Die dahingehende Aufgabenstellung ist durch das im Anspruch 1 bestimme Verfahren sowie durch die im nebengeordneten Anspruch 11 bestimmte Vorrichtung gelöst. Besondere Ausführungsformen der Erfindung sind in den Unteransprüchen bestimmt.

Erfindungsgemäß wird die Filtereinheit, an der die Druckdifferenz zwischen der Vorfilter- und der Hauptfilterseite einen vorgebbaren Grenzwert überschreitet, aus der entsprechenden Filterlinie herausgeschaltet, regeneriert und anschließend wieder in die Filterlinie hineingeschaltet. Das Vorgeben des Grenzwertes kann manuell erfolgen oder durch ein automatisch ablaufendes Optimierungsprogramm. Das Regenerieren erfolgt vorzugsweise durch Rückspülen. Alternativ oder ergänzend kann die zu regenerierende Filtereinheit auch vorwärts gespült und/oder chemisch regeneriert werden. Eine Filtereinheit besteht in der Regel aus einem Filtergehäuse und einem Filterelement, beispielsweise einer Filterkerze. Durch das Herausschalten der zu regenerierenden Filtereinheit würden die in Betrieb verbleibenden Filtereinheiten mit einem erhöhten Volumenstrom beaufschlagt. Dies kann zu Problemen, beispielsweise zu einem Verblocken von verwendeten Filterkerzen führen. Aus diesem Grund wird vor oder während dem Herausschalten der zu regenerierenden Filtereinheit der in die Vorrichtung eintretende Volumenstrom reduziert. Dadurch wird eine negative Beeinträchtigung der in Betrieb verbleibenden Filtereinheiten verhindert. Dieses Verfahren läßt sich durch Einsatz einer entsprechenden Steuereinrichtung, die als Eingangsgrößen beispielsweise die an den Filtereinheiten auftretenden Druckdifferenzen aufweist, vollautomatisch betreiben. Der in die Vorrichtung eintretende Volumenstrom wird vorzugsweise mittels einer Pumpe eingestellt, die von der Steuereinrichtung gesteuert ist.

Die Filtriervorrichtung ist aus mindestens zwei Filterlinien bausteinartig zusammengesetzt, wobei die genannten Filterlinien parallel geschaltet sind. jede Filterlinie weist einen Vorfilter und einen Endfilter auf, wobei je nach Anwendungsfall auch mehrere Vorfilter und/oder mehrere Endfilter und/oder zwischen Vor- und Endfilter zwischengeschaltete Zwischenfilter vorgesehen sein können. Die Verbindungsstelle zwischen zwei Filtereinheiten einer Filterlinie ist über eine Querleitung mit der entsprechenden Verbindungsstelle mindestens einer weiteren Filterlinie verbunden. Somit sind im normalen Betriebsfall alle Vorfilter- und Endfiltereinheiten im Filtrierbetrieb, wobei dank der Querleitung mit ihren Anschlußstellen bezogen auf die beiden Filterlinien jede Filtereinheit in die Filterlinie hinein- und herausschaltbar und unabhängig von der anderen Filtereinheit regenerierbar, insbesondere rückspülbar ist. Nach dem Regenerieren, beispielsweise des Vorfilters in der ersten Filterlinie, kann vor dem abschließenden Erhöhen des in die Vorrichtung eintretenden Volumenstromes auch der Vorfilter einer zweiten Filterlinie regeneriert werden, insbesondere rückgespült werden. Das Regenerieren erfolgt vorzugsweise durch Rückspülen mit Wasser mit einer Temperatur von mehr als 60°C. Die Reinigungswirkung durch das Rückspülen und/oder die Standzeit des Filterelements kann dadurch erhöht werden, daß die Anströmgeschwindigkeit des Filterelements jedenfalls zu Anfang des Rückspülens gleich oder größer ist als beim Filtrieren. Wenn auch beim Rückspülen die Druckdifferenz an dem Filterelement gemessen wird, insbesondere deren zeitlicher Verlauf, kann daraus ein Rückschluß auf die Effizienz des Rückspülvorganges gezogen werden.

Ist der Druck auf der Eingangs- oder Ausgangsseite einer Filtereinheit bekannt oder fest vorgegeben, kann die Druckdifferenz auch durch eine einfache Messung des Druckes auf der Ausgangs- bzw. Eingangsseite bestimmt werden. Für die Drucksensoren und deren Einsatz sind alle bekannten Meßverfahren einschlägig. Vorzugsweise liefern die Drucksensoren ein elektrisches Ausgangssignal an die Steuereinrichtung, das vorgegebenen Standards entspricht, beispielsweise 4 bis 20 mA Ausgangsstrom, 0 bis 10 Volt Ausgangsspannung oder digital codiert ist. Parallel dazu kann der jeweilige Meßwert auch unmittelbar an dem Drucksensor angezeigt werden.

Durch die Steuerung des in die Vorrichtung eintretenden Volumenstromes mittels der an den Filtereinheiten auftretenden Druckdifferenzen und/oder gemäß der Partikelkonzentration der zu filtrierenden Flüssigkeit, wird die Filtrierbarkeit der zu filtrierenden Flüssigkeit Stellgröße für die Filtrierleistung der Vorrichtung. Die Partikelkonzentration und gegebenenfalls auch die Partikelgrößenverteilung ist auf verschiedene Weise meßbar. Beispielsweise kann hierfür ein optischer Sensor eingesetzt werden. Für die Steuereinrichtung kann eine mehr oder weniger handelsübliche Datenverarbeitungsanlage, beispielsweise auch ein Personal-Computer, eingesetzt werden, der ein vorgegebenes Steuerprogramm abarbeitet. Das Steuerprogramm kann auch selbst-optimierend arbeiten, beispielsweise den Verlauf der auftretenden Druckdifferenzen über der Zeit abspeichem und die Häufigkeit und Dauer der Regenerationsvorgänge sowie den Grenzwert für die Druckdifferenz, der das Regenerieren auslöst, entsprechend einer optimalen Effizienz der Filtriervorrichtung einstellen. Die Filtrierbarkeit der Flüssigkeit ist beispielsweise durch eine Indexmessung gemäß DE 198 31 946 A1, eine Trübungsmessung, die Messung der Partikelkonzentration und/oder mittels eines Testfilters bestimmbar.

Als Filterelemente werden vorzugsweise gewickelte und/oder plissierte Filterkerzen verwendet, insbesondere sog. Tiefenfilterkerzen. Gewickelte Filterkerzen weisen hierbei vorzugsweise mehrere Lagen Vlies aus beispielsweise Polypropylen auf, wobei die äußeren Lagen vorzugsweise gröber sind als die inneren Lagen. Typische Anströmgeschwindigkeiten für derartige Filterkerzen liegen beispielsweise unterhalb von 1000 l/h und Kerze, insbesondere etwa 400 l/h und Kerze. Als Vorfilter werden beispielsweise Filterkerzen mit einer Abscheiderate (Nominal) von mehr als 2 µm verwendet, während für die Endfilter entsprechende Abscheideraten unter 2 µm liegen. Im Gegensatz zu der Cross-Flow-Filtration handelt es sich im vorliegenden Verfahren um eine sog. statische Filtration. Die Filtereinheiten der Filterlinien sind dabei untereinander über entsprechende Ventile wahlweise miteinander verschaltbar, insbesondere ist beispielsweise der Vorfilter einer ersten Filterlinie mit den Endfiltern des ersten und zweiten Filterlinie zusammenschaltbar, während der Vorfilter der zweiten Filterlinie rückgespült wird.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im einzelnen beschrieben sind. Dabei können die in den Ansprüchen und in der Beschreibung erwähnten Merkmale jeweils einzeln für sich oder in beliebiger Kombination erfindungswesentlich sein.
- Fig.1 bis 4: zeigen in schematisierter Darstellung verschiedene Betriebszustände des erfindungsgemäßen Verfahrens,
- Fig. 5: zeigt den Ablauf des erfindungsgemäßen Verfahrens anhand eines Flußdiagrammes,
- Fig. 6: zeigt eine gewickelte Filterkerze, und
- Fig. 7: zeigt eine plissierte Filterkerze.

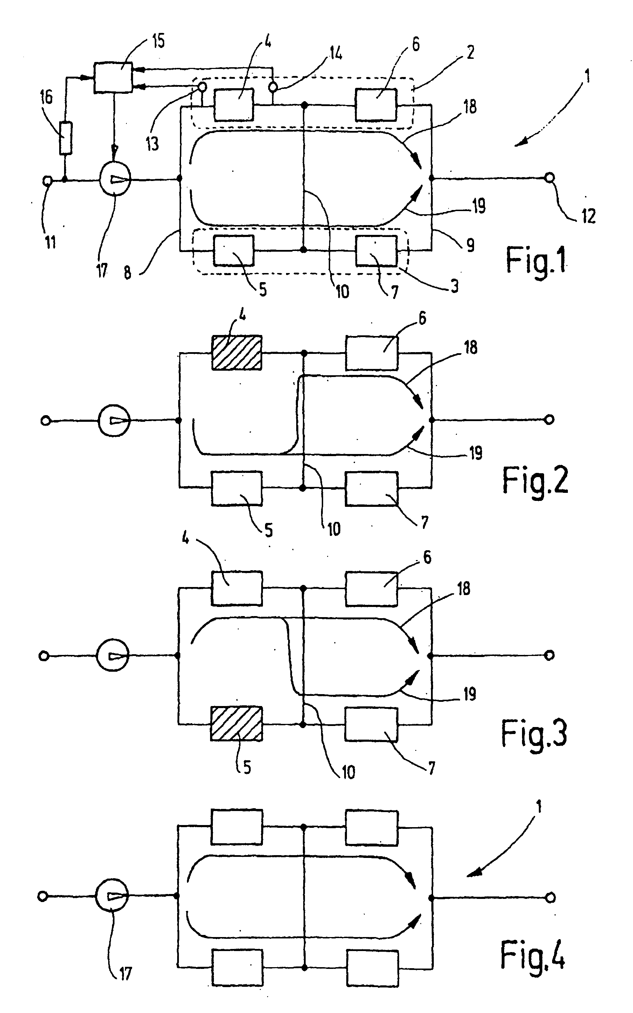

Die Fig. 1 bis 4 zeigen in schematisierter Darstellung verschiedene Betriebszustände des erfindungsgemäßen Verfahrens zum Filtrieren von Flüssigkeiten, insbesondere Getränken, mit einer Filtriervorrichtung 1, die im dargestellten Ausführungsbeispiel aus zwei Filterlinien 2, 3 zusammengesetzt ist, und jede Filterlinie 2, 3 aus einem Vorfilter 4, 5 und einem Endfilter 6, 7 besteht. In entsprechender Weise kann die Filtervorrichtung 1 weitere Filterlinien und/oder jede Filterlinie weitere Filtereinheiten aufweisen. Die Vorfilter 4, 5 sind eingangsseitig mit einer Eingangssammelleitung 8 zusammengeschaltet. Die Endfilter 6, 7 sind ausgangsseitig mit einer Ausgangssammelleitung 9 zusammengeschaltet. Die Vorfilter 4, 5 der ersten bzw. zweiten Filterlinie 2, 3 sind mit den Endfiltern 7; 6 der jeweils anderen Filterlinie 3, 2 über eine Querleitung 10 zusammenschaltbar.

Aus Gründen der Übersichtlichkeit sind die zugehörigen Ventile zum Ein- oder Ausschalten der Verbindungsleitungen zwischen Eingang 11 und den Vorfiltern 4, 5, den Endfiltern 6, 7 und dem Ausgang 12 sowie zwischen Vorfilter 4, 5 und Endfilter 6, 4 einschließlich der Querleitung 10 nicht dargestellt. Ebenfalls aus Gründen der Übersichtlichkeit ist lediglich für den ersten Vorfilter 4 ein- und ausgangsseitig je ein Drucksensor 13, 14 dargestellt, deren Signale an die Steuereinrichtung 15 weitergeleitet werden. Diese erhält außerdem ein Signal eines Sensors 16, der die Partikelkonzentration in der zu filtrierenden Flüssigkeit ermittelt. Die Steuereinrichtung 15 steuert ihrerseits die Pumpe 17, und mithin den zu filtrierenden Volumenstrom.

Die Fig. 1 zeigt den Zustand der Vorrichtung, wenn alle Filtereinheiten 4, 5, 6, 7 durchströmt werden und sich insbesondere zwei Filtrierpfade 18, 19 über die erste bzw. zweite Filterlinie 2, 3 ausbilden. Die Querleitung 10 kann in diesem Betriebsfall geöffnet oder geschlossen sein. Für einen bevorzugten Anwendungsfall der vorliegenden Erfindung, die Weinfiltration, liegt der Volumenstrom beispielsweise bei etwa 6000 l/h. Die Vorfilter 4, 5 haben eine Abscheiderate (Nominal) von größer 2 µm, die Endfilter 6, 7 eine entsprechende Abscheiderate von kleiner 2 µm. Der filtrierte Wein kann am Ausgang 12 entnommen werden.

Die Fig. 2 zeigt den Betriebsfall, in dem der erste Vorfilter 4 aus dem ersten Filtrierpfad 18 herausgeschaltet wurde, nachdem die von der Steuereinrichtung 15 gemäß den Signalen der Drucksensoren 13, 14 ermittelte Druckdifferenz einen vorgegebenen Grenzwert überschritten hat. Daraufhin wird der Volumenstrom durch Herabsetzen der Pumpenleistung reduziert. Der reduzierte Volumenstrom fließt nun über den einzigen in Betrieb befindlichen zweiten Vorfilter 5 und teilt sich anschließend über die Querleitung 10 auf die beiden in Betrieb befindlichen Endfilter 6, 7 auf. Nachdem der erste Vorfilter 4 rückgespült und damit gereinigt wurde, wird dieser wieder in den Filtrierpfad 18 eingeschaltet.

Die Fig. 3 zeigt den Betriebsfall, in dem der zweite Vorfilter 5 aus dem zweiten Filtrierpfad 19 herausgeschaltet wurde, nachdem die zugehörige Druckdifferenz den vorgegebenen Grenzwert überschritten hat oder regelmäßig im Anschluß an das Rückspülen des ersten Vorfilters 4. In diesem Fall übernimmt der erste Vorfilter 4 den gesamten, weiterhin reduzierten Volumenstrom, der sich anschließend u.a. über die Querleitung 10 auf die beiden in Betrieb befindlichen Endfilter 6, 7 aufteilt. Erst nachdem auch der zweite Vorfilter 5 rückgespült und damit gereinigt ist und wieder in den zweiten Filtrierpfad 19 hineingeschaltet wurde, wird die Leistung der Pumpe 17 und damit der zu filtrierende Volumenstrom wieder auf den vorzugsweise ursprünglichen Wert erhöht. Demgemäß ergibt sich der Zustand der Vorrichtung 1 gemäß Fig. 4, der im wesentlichen dem in Fig. 1 dargestellten Betriebszustand entspricht.

Anstelle von zwei Drucksensoren 13, 14 kann auch ein einziger sog. Differenzdrucksensor eingesetzt werden, der entweder über zwei Druckanschlüsse für die Vor- und Nachfilterseite verfügt oder den Druck auf der Vor- oder Nachfilterseite gegenüber einem vorgegebenen Referenzdruck ermittelt und anschließend die Differenz bildet. Die Pumpenleistung bzw. der zu filtrierende Volumenstrom kann in diskreten, vorgebbaren Schritten einstellbar sein, beispielsweise im Betriebsfall der Fig. 2 und 3 auf die Hälfte des Volumenstromes im Betriebszustand der Fig. 1 und 4. Alternativ oder ergänzend ist es auch möglich, die Pumpenleistung entsprechend den an den Filtereinheiten 4, 5, 6, 7 auftretenden Druckdifferenzen kontinuierlich zu regeln, beispielsweise die Pumpenleistung bei langsam ansteigenden Druckdifferenzen entsprechend ab einem vorgebbaren Grenzwert, der auch einen Grenzwertbereich darstellen kann, stetig zu reduzieren. Damit kann beispielsweise bei bekannter und relativ geringer noch zu filtrierender Restmenge ein Rückspülvorgang vermieden werden, der bei weiterem Volllastbetrieb erforderlich wäre.

Die Fig. 1 bis 4 zeigen beispielhaft die Betriebszustände für das Rückspülen der beiden Vorfilter 4, 5. Das erfindungsgemäße Verfahren ist entsprechend anzuwenden, wenn einer oder beide der Endfilter 6, 7 rückzuspülen sind. Möglich ist auch, daß ein oder mehrere Vorfilter 4, 5, und/oder ein oder mehrere Endfilter 6, 7, gleichzeitig regeneriert werden. Insbesondere ist bei der dargestellten Vorrichtung 1 mit zwei Filterlinien 2, 3 ein gleichzeitiges Regenerieren des ersten Vorfilters 4 und des zweiten Endfilters 7 möglich. Wesentlich ist, daß zu jedem Zeitpunkt mindestens ein Vorfilter 4, 5 und ein Endfilter 6, 7 einen Filtrierpfad 18, 19 bilden, so daß - wenngleich mit reduzierter Durchflußleistung - stets ein Filtrieren durch die Vorrichtung 1 erfolgt.

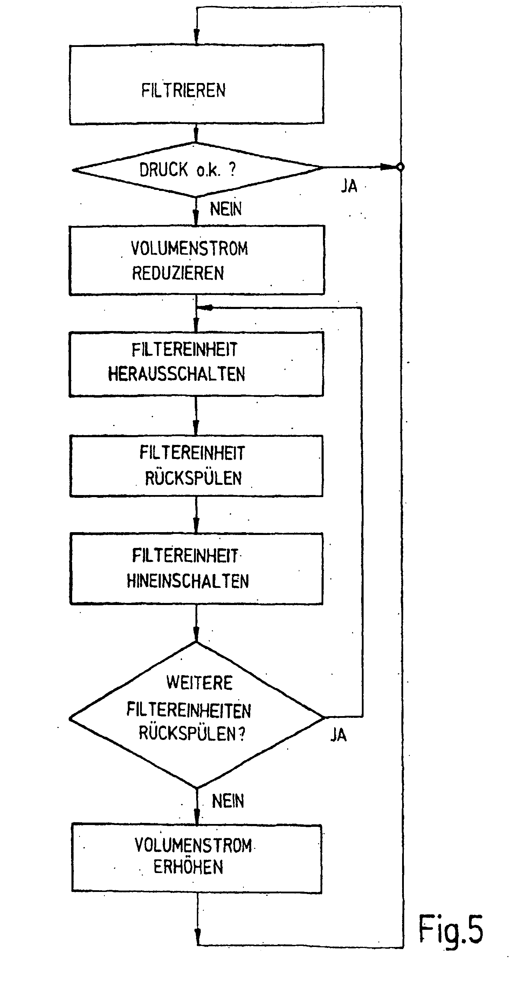

Die Fig. 5 zeigt den Ablauf des erfindungsgemäßen Verfahrens anhand eines Flußdiagrammes. Ausgehend vom Grundzustand "FILTRIEREN" erfolgt eine unregelmäßige, regelmäßige oder permanente Abfrage der Druckdifferenzen an mindestens einem, vorzugsweise allen Filtereinheiten 4, 5, 6, 7. Solange die ermittelten Druckdifferenzen unterhalb eines vorgegebenen Grenzwertes liegen, behält die Filtervorrichtung 1 ihren Filtrierbetrieb bei. Die Grenzwerte können unterschiedlich für die einzelnen Filtereinheiten 4, 5, 6, 7 sein, insbesondere unterschiedlich für Vorfilter 4, 5 und Endfilter 6, 7.

Stellt die Steuereinrichtung 15 ein Überschreiten des Grenzwertes fest, wird zunächst der Volumenstrom reduziert. Anschließend wird die betreffende Filtereinheit aus dem Filtrierpfad 18, 19 herausgeschaltet und regeneriert, beispielsweise rückgespült. Beim Rückspülen kann ebenfalls die auftretende Druckdifferenz überwacht werden, insbesondere kann diese Druckdifferenz als Maß für den erzielten Reinigungseffekt verwendet werden. Nach beendeter Reinigung wird die Filtereinheit wieder in den Filtrierpfad 18, 19 hineingeschaltet.

In der besonderen Ausführungsart der Erfindung gemäß Fig. 5 wird dann abgefragt, ob weitere Filtereinheiten 4, 5, 6, 7 rückzuspülen sind. Das Rückspülen weiterer Filtereinheiten 4, 5, 6, 7 kann routinemäßig erfolgen oder nur bei Überschreitung des Grenzwertes für die Druckdifferenz. Für den Fall, daß weitere Filtereinheiten 4, 5, 6, 7 rückzuspülen sind, werden die entsprechenden Verfahrensschritte "Filterelement Herausschalten/Rückspülen/Hineinschalten" wiederholt.

Sind keine weiteren Filtereinheiten 4, 5, 6, 7 mehr rückzuspülen, wird der Volumenstrom wieder erhöht, insbesondere auf den ursprünglichen Nennwert, und die Anlage geht wieder in den Ausgangszustand "FILTRIEREN" über.

Als Filtereinheiten 4, 5, 6, 7 kommen vorzugsweise sog. Filterkerzen, insbesondere Tiefenfilterkerzen, zum Einsatz. Diese können beispielsweise gewickelt oder plissiert ausgeführt sein.

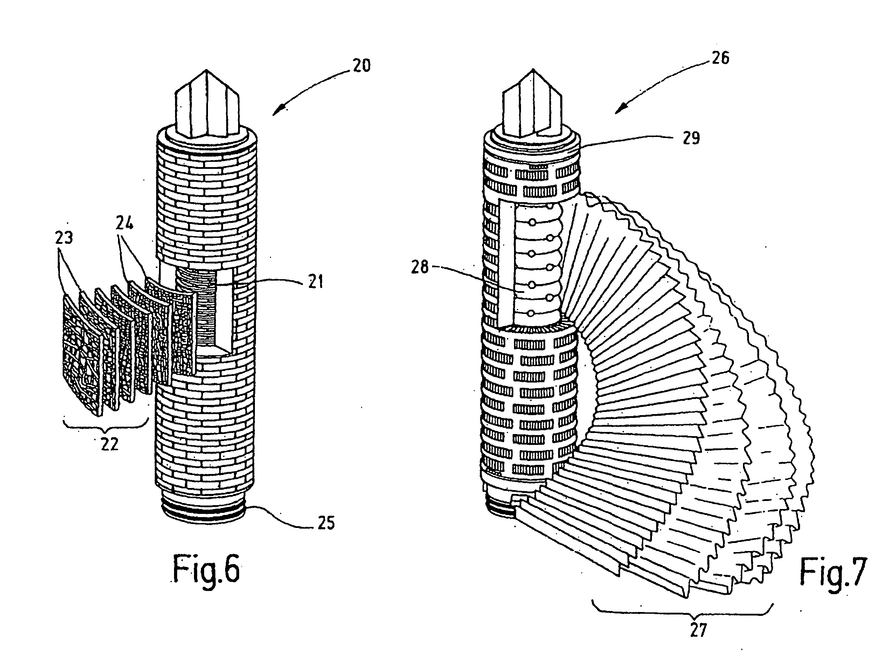

Die Fig. 6 zeigt eine gewickelte Filterkerze 20 mit einem inneren Stützrohr 21 und mehreren gewickelten Filterlagen 22, die aus Papier, Textilien, Kunststoffen oder sonstigen geeigneten Materialien bestehen können, insbesondere aus einem Polypropylen-Vlies. Vorzugsweise weisen die äußeren Filterlagen 23 größere Poren oder Maschen auf, als die inneren Filterlagen 24. Es können beispielsweise bis zu 100 Lagen übereinander gewickelt sein, von denen beispielsweise 10 Lagen unterschiedliche Poren- oder Maschenweite aufweisen. Auf der äußeren Umfangsfläche kann die gewickelte Filterkerze 20 ein Stützgewebe, insbesondere ein Drahtgewebe, oder ein äußeres Stützrohr aufweisen. An ihrem in der Darstellung unteren Ende sind in zwei Nuten der Filterkerze 20 jeweils ein O-Ring 25 eingelegt zum Abdichten zwischen Ein- und Ausgangsseite des zugehörigen Filters. Typischerweise ist die Strömungsrichtung von außen nach innen, so daß die filtrierte Flüssigkeit über den im wesentlichen zylindrischen Hohlraum des inneren Stützrohres 21 axial abfließt. Grundsätzlich ist aber ebenso eine Strömungsrichtung von innen nach außen möglich.

Die Fig. 7 zeigt eine plissierte Filterkerze 26 mit jeweils plissierten übereinandergelegten Filterlagen 27. Auch hier können die äußeren Filterlagen eine größere Poren- oder Maschengröße aufweisen, als die inneren Filterlagen. Die Anzahl der Filterlagen 22, 27 ist bei den plissierten Filterkerzen 26 in der Regel geringer als bei den gewickelten Filterkerzen 20. Neben dem inneren Stützrohr 28 weist die plissierte Filterkerze 26 auch ein äußeres Stützrohr 29 auf, das relativ großflächige Durchgangsöffnungen für die Flüssigkeit aufweist. Das äußere Stützrohr 29 bzw. ein äußeres Stützgewebe sind insbesondere im Hinblick auf das Rückspülen der Filterkerzen erforderlich.

### Nachfolgend wird beispielhaft der Verfahrensablauf FILTRIEREN beschrieben:

Nur wenn sich die Vorrichtung bzw. das Steuerprogramm der Steuereinrichtung 15 im Modus "Stand-by" befindet, kann das Programm FILTRIEREN gestartet werden. Vorfilter 4, 5 und Endfilter 6, 7 werden nacheinander mit der zu filtrierenden Flüssigkeit gefüllt. Dabei wird bei jedem Filtergehäuse darauf geachtet, dass zwischen dem Füllstandsignal ("Gehäuse gefüllt") von Vibrations-Grenzschaltern und dem Schließen der Entlüftungsventile nur kurze Zeit liegt, um so wenig Flüssigkeit wie möglich über die Entlüftungsventile zu verlieren. Zuerst sollen beide Filterlinien 2, 3 gleichzeitig mit der vollen Leistung betrieben werden, die eingestellt wurde. Beispielsweise können maximal 3000 Liter/Stunde pro Filterlinie 2, 3 bzw. 6ooo Liter/Stunde insgesamt eingestellt werden.

Bei Erreichen eines bestimmten einstellbaren Differenzdrucks an einem Kerzengehäuse wird steuerprogrammtechnisch eine Markierung gesetzt. Die Pumpenleistung wird herunter geregelt bis die halbe Durchflußmenge erreicht ist, anschließend wechselt der betreffende Filter automatisch in die Programmsequenz "Entleeren Wein". Die beiden Vorfilter 4, 5 und die beiden Endfilter 6, 7 sind gegeneinander verriegelt, so dass nur jeweils ein Vorfilter 4 oder 5 und ein Endfilter 6 oder 7 gleichzeitig in die Sequenz "Entleeren Wein" und damit in die anschließende Sequenz "Reinigen" wechseln können.

Während der Sequenz "Entleeren Wein" wird die Flüssigkeit, im Ausführungsbeispiel Wein, mittels Druckluft, die über Druckluftventile in die Gehäuse eingeblasen wird, zuerst auf der Unfiltratseite gegen den Fluß in die Leitung des Filters gedrückt, der noch filtriert. Dabei muß darauf geachtet werden, dass der von der Pumpe bereitgestellte Systemdruck stets kleiner ist, als der zum Leerdrücken des Gehäuses benötigte Luftdruck. Erfahrungsgemäß ist für eine vollständige Entleerung ein Druckunterschied von mindestens 1 bar erforderlich. Durch einen an der Luftdruckleitung angeschlossenen Druckminderer läßt sich der benötigte Druckluft manuell einstellen. Mit Hilfe von Füllstand-Grenzschaltem läßt sich das Entleeren der Gehäuse kontrollieren. Nach dem Ablauf einer eingestellten Zeit schließt das Eingangsventil.

In der zweiten Phase der Sequenz "Entleeren Wein" wird die Filtratseite des zu reinigenden Gehäuses entleert. Nach Ablauf einer weiteren Zeit schließt das Auslaßventil. Das Gehäuse ist nun vollständig vom Filtrierpfad getrennt. Sollte der andere Vorfilter 4, 5 bzw. Endfilter 6 oder 7 ebenfalls eine Markierung zum "Reinigen" bekommen haben, wartet dieser bis die Reinigung des ersten Filters beendet ist und sich der erste Filter wieder im Programm FILTRIEREN befindet. Erreichen beide Vorfilter 4, 5 oder Endfilter 6, 7 gleichzeitig die eingestellte Druckdifferenz, haben die Filter 4, 6 der in der Darstellung der Figuren 1 bis 4 oberen ersten Filterlinie 2 Vorrang. Ist die Reinigung z.B. des ersten Vorfilters 4 abgeschlossen, wird die Markierung gelöscht und der bereits markierte zweite Vorfilter 5 beginnt mit der Reinigung.

Nach der Programmsequenz "Entleeren Wein" schließt sich die Programmsequenz "Reinigen" an. Dabei wird der betreffende Filter gegen die Fließrichtung mit Heißwasser rückgespült. Als Beispiel wird dieser Vorgang kurz für den Vorfilter 4 der Linie 1 erläutert:

Das Heißwasser fließt über ein Wassereinlaßventil in das Gehäuse des Vorfilters 4 hinein. Die Luft entweicht über das geöffnete Entlüftungsventil. Ist das Gehäuse gefüllt, schließt das Entlüftungsventil und ein Wasserauslaßventil öffnet. Für eine eingestellte oder steuerprogrammtechnisch vorgegebene Zeit wird der Vorfilter 4 rückgespült, wobei die durch das Filtrieren gebildete Deckschicht und die in das Filtermedium eingedrungenen Partikel gelöst und herausgespült werden. Auf diese Weise wird das Filtermedium regeneriert, d.h. der durch die abgetrennten Partikel erhöhte Filtrierwiderstand, der am Anstieg der Druckdifferenz erkennbar war, wird abgebaut. Der ersten Rückspülphase schließt sich eine Einwirkphase an, deren Zeitdauer einstellbar oder steuerprogrammtechnisch bestimmbar ist und in der die Wassereinlaßventile und die Wasserauslaßventile geschlossen sind. Der Einwirkphase folgt eine zweite Rückspülphase, in der durch die Einwirkphase von der Filteroberfläche mechanisch und/oder chemisch gelöste Partikel herausgespült werden. Das Ende der Rückspülphase und/oder der Einwirkphase kann alternativ oder ergänzend zu einer zeitdauerbasierten Steuerung auch durch die sich einstellenden Druckdifferenzen an dem jeweiligen Filter gesteuert sein.

Nach der Sequenz "Reinigen" schließt sich die Sequenz "Entleeren Wasser" an. Dabei werden die Wassereinlaßventile geschlossen und die Wasserauslaßventile auf Filtratseite und Unfiltratseite geöffnet. Mittels Druckluft wird das Wasser aus dem Gehäuse gedrückt. Die Abkühlung der Gehäuse erfolgt über ein Einblasen von Druckluft für eine ausreichend lange Zeit und/oder über eine Kaltwasserspülung. Abschließend wird der gereinigte Filter in der Sequenz "Auffüllen Wein" wieder mit Wein befüllt. Ist der Füllstand erreicht und das Entlüftungsventil wieder geschlossen, befindet sich der Filter wieder in der Programmsequenz FILTRIEREN.

Während sich ein Vorfilter 4, 5 und/oder ein Endfilter 6, 7 in der Sequenz "Reinigen" befindet, wird die Pumpenleistung so geregelt, dass die Differenzdrücke an den sich in der Sequenz "FILTRIEREN" befindenden Filter nicht den vorgebbaren Wert überschreiten. Der Durchfluß kann dabei stufenlos auf einen Minimalwert heruntergeregelt werden. Aus technischen Gründen kann in bestimmten Anwendungsfällen die Leistung der Pumpe 17 nicht unter dem Minimalwert gedrosselt werden, da ansonsten das Anfahrdrehmoment der Pumpe 17 unterschritten wird. Außerdem erhöht die Vorrichtung 1 selbständig die Durchflußmenge nach erfolgtem Reinigen und Wiederbefüllen der gereinigten Filter. Bei einem Abschalten der Pumpe 17 ist ein automatischer Neustart aus regelungstechnischen Gründen und aus Sicherheitsgründen in der Regel nicht möglich. Ein automatisches Abschalten der Pumpe 17 bedeutet immer eine Störung.

Überwacht wird die gewünschte Durchführung des Programms durch Druckmessung (absolut oder gegen Atmosphäre) vor und hinter den Filtergehäusen, durch Flußmessen am Ausgang der Vorrichtung 1 und/oder durch Füllstandsmessung an jedem Filterelement 4, 5, 6, 7.
Bei einer Abweichung der gemessenen Parameter von den eingestellten Sollwerten, schaltet die Pumpe 17 ab und es erfolgt eine Störungsmeldung. Die Pumpe 17 ist zusätzlich durch ein Sicherheitsventil gegen zu hohen Druck abgesichert.

Die Programmsequenz "FILTRIEREN" kann durch Drücken einer "Pause"-Taste in jeder Phase angehalten werden. Dabei werden auch die Nebensequenzen "Entleeren Wein", "Reinigen", "Entleeren Wasser" und "Auffüllen Wein" unterbrochen. Die Pumpe 17 wird abgeschaltet und alle Ventile geschlossen. Auf einem Display des Bedientableaus erscheint die Meldung: "FILTRIEREN wurde gestoppt/FILTRIEREN kann wieder gestartet werden": Nach dem Quittieren dieser Meldung hat die Bedienperson die Wahl entweder das FILTRIEREN fortzusetzen oder "Produktionsende" zu wählen. Die Wahl einer anderen Programmsequenz ist nicht möglich.
Nach Drücken der Taste "START FILTRIEREN" wird das FILTRIEREN an der Stelle fortgeführt, an der es zuvor gestoppt wurde.

### Nachfolgend wird beispielhaft der Verfahrensablauf zum Beenden des FIL-TRIERENS bzw. zum Produktionsende beschrieben:

Das Programm "FILTRIEREN" kann nur über das Auslösen des Programms "Produktionsende" beendet werden. In diesem Fall wird die Pumpe 17 sofort gestoppt. Anschließend wird der Wein mittels Druckluft in Fließrichtung von den Vorfiltem 4, 5 in die Endfilter 6, 7 und danach von den Endfiltem 6, 7 aus der Vorrichtung 1 heraus gedrückt. Danach erscheint auf dem Display die Meldung "Ein- und Ausgangsleitungen abtrennen".
Da sowohl die Pumpe 17 als auch ein Ausgangsrohrstück mit dem Flußmesser in der Programmsequenz "Produktionsende" gespült werden, müssen die Leitungen für den filtrierten und unfiltrierten Wein abgeschraubt werden. Die Meldung muß von Hand durch Drücken der entsprechenden Taste quittiert werden. Ist dies geschehen, starten die Filter 4, 5, 6, 7 nacheinander in der Reihenfolge erster Vorfilter 4 - zweiter Vorfilter 5 - erster Endfilter 6 - zweiter Endfilter 7 mit der Sequenz "Reinigen". Diejenigen Filter, die während des Filtrierens schon in den Sequenzen "Entleeren Wein", "Reinigen" oder "Entleeren Wasser" waren, beenden dies und verbleiben im angezeigten Modus "ready".

Nachdem alle Filter 4, 5, 6, 7 mit Heißwasser gespült worden sind, werden alle gleichzeitig entleert. Danach werden auch die Zugangs-, die Zwischen- und die Ausgangsleitung der Vorrichtung 1 gespült; dies erfolgt jedoch vorzugsweise mit Kaltwasser. Während der Spülung der Eingangsleitung fördert die Pumpe 17 mit minimaler Drehzahl in entgegengesetzter Richtung. Auf diese Weise wird die Pumpe 17 schonend gereinigt. Anschließend werden die Zugangsleitung inklusive der Pumpe 17 und die Ausgangsleitung mittels Druckluft entleert. Die Druckluft wird dafür über den ersten Vorfilter 4 bzw. den ersten Endfilter 6 in die Ein- bzw. Ausgangsleitung gedrückt. Während der Spülung der Zwischen- bzw. Querleitung 10 über entsprechende Ventile, die zwischen die Wasserzuleitung, Filter 4, 5, 6, 7 und Wasserableitung geschaltet sind, wird Druckluft in das Gehäuse des zweiten Vorfilters 5 geblasen, um ein Eindringen von Spülwasser in den gereinigten Filter zu verhindern.
Als letzten Programmschritt werden alle Gehäuse mit Druckluft vorgespannt, um ein Wiederverkeimen und einen eventuellen Vakuumschaden beim Abkühlen der Gehäuse zu vermeiden. Danach befindet sich die Anlage im Modus "Stand-by".

### Nachfolgend wird beispielhaft der Verfahrensablauf "Reinigen" beschrieben:

Während dem FILTRIEREN kann bei der Reinigung mit Heißwasser rückgespült werden oder mit Filtrat aus der Vorfilterstufe. Das komplette Programm "Reinigen" kann aber noch eine Spülung mit Kaltwasser beinhalten. Einzelne Schritte des Programms laufen als Sequenzen auch während der Programme "FILTRIEREN" und "Produktionsende" ab, wie vorstehend beschrieben. Das komplette Programm "Reinigen" wird nur dann durchgeführt, wenn es als Einzelprogramm im "Stand-by"-Modus der Vorrichtung 1 gestartet wurde. Nach den Schritten "Rückspülen mit Heißwasser" und "Entleeren Wasser" werden die Gehäuse über die jeweiligen Wassereinlaßventile mit Kaltwasser befüllt und anschließend die gesamte Vorrichtung 1 mit Kaltwasser für eine eingestellte Zeit in Fließrichtung gespült.
Der Wasseraustritt erfolgt dabei über die jeweiligen Wasserauslaßventile. Der Spülung mit Kaltwasser schließt sich wieder eine "Entleerung Wasser" an. Danach befindet sich die Anlage wieder im Modus "Stand-by".

Da bei dem Einzelprogamm "Reinigen" sowohl mit Heiß- als auch mit Kaltwasser gespült wird, aber nur eine Wasserleitung zur Verfügung steht, können immer nur ein Filter 4, 5, 6, 7 und nicht zwei oder mehrere Filter 4, 5, 6, 7 auf einmal gereinigt werden.

### Nachfolgend wird beispielhaft der Verfahrensablauf "Sterilisieren" beschrieben:

Bei der Sequenz "Sterilisieren" werden die Gehäuse mit Heißwasser aufgefüllt und in Fließrichtung über die Wassereinlaßventile gespült.
Der Wasseraustritt erfolgt wieder über die Wasserauslaßventile. Alternativ und/oder ergänzend können die Gehäuse auch mit Heißdampf gespült bzw. ausgeblasen werden. Während der Steritisationszeit werden alle Ventile getaktet (ON/OFF) betrieben, um gespült und sterilisiert zu werden. Die Vorgehensweise ist dabei folgende:

Zuerst erfolgt der Wasseraustritt über die ausgangsseitigen Wasserauslaß-Ventile der Endfilter 6, 7. Diese werden geschlossen und die eingangsseitigen Ventile der Endfilter 6, 7 werden für eine kurze einstellbare Zeit geöffnet. Sind die eingangsseitigen Ventile wieder geschlossen, werden die ausgangsseitigen Ventile der Vorfilter 4, 5 für den gleichen Zeitraum geöffnet. Das gleiche geschieht mit den eingangsseitigen Ventilen der Vorfilter 4, 5. Nachdem die eingangsseitigen Ventile der Vorfilter 4, 5 geschlossen sind, werden die Entlüftungs-Ventile der Vorfilter 4, 5 geöffnet bis die Vorfilter wieder gefüllt sind. Zur Sterilisation werden die Entlüftungsventile noch eine eingestellte Zeit lang im geöffneten Zustand belassen. Danach werden sie geschlossen und die Entlüftungsventile der Endfilter 6, 7 geöffnet. Sind die Endfilter 6, 7 wieder gefüllt und die Sterilisationszeit für die Entlüftungsventile der Endfilter 6, 7 abgelaufen, schließen diese und die Wasserauslaßventile öffnen wieder. Diese Prozedur wiederholt sich solange bis die Gesamtsterilisationszeit der Vorrichtung 1 abgelaufen ist.

Anschließend werden die Zu- und Ausgangsleitung mit entsprechenden Ventilen sowie die Zwischen- oder Querleitung 10 mit dem zugehörigen Absperr-Ventil sterilisiert. Die Pumpe 17 dreht dabei rückwärts und fördert Heißwasser durch die Zugangsleitung. Auf diese Weise wird auch die Pumpe 17 sterilisiert. Für das Programm "Sterilisieren" müssen daher alle Leitungen (Zu- und Abgang) von anderen Systemen abgekoppelt sein.
Die Meldung "Zugangs- und Abgangsleitungen abtrennen" erfolgt nach Drücken der "Start"-Taste für das Sterilisieren.

Nach diesem Programmschritt schließen alle Ventile und die Sequenz "Entleeren Wasser" wird durchgeführt. Danach werden die Gehäuse über die Wassereinlaßventile mit Kaltwasser aufgefüllt und die gesamte Vorrichtung 1 in Fließrichtung gespült. Der Wasserauslaß erfolgt über die Wasserauslaß-Ventile der Endfilter 6, 7. Die anderen Wasserauslaßventile werden bei der Kaltwasserspülung nicht getaktet. Abschließend erfolgt wieder die Sequenz "Entleeren Wasser". Die Vorrichtung 1 befindet sich danach im Modus "Stand-by".

### Nachfolgend wird beispielhaft der Verfahrensablauf "Einwirken Heißwasser" beschrieben:

Die Anlage wird komplett über entsprechende Ventile auf der Eingangsseite der Vorrichtung 1 mit Heißwasser aufgefüllt und für eine vorgebbare Zeit gespült bis alle Gehäuse und Leitungen eine entsprechende Temperatur angenommen haben. Dann werden die Ventile nacheinander vom Ausgang in Richtung Eingang geschlossen, so dass die Gehäuse gefüllt mit Heißwasser unter einem erhöhten Druck stehen. Dabei werden zuerst die Wasserauslaßventile der Endfilter 6, 7 geschlossen, dann die eingangsseitigen Ventile der Endfilter 6, 7, die Verbindungsventile zwischen Vorfilter 4, 5 und Endfilter 6, 7, und zuletzt die eingangsseitigen Ventile der Vorfilter 4, 5. Auf. diese Weise befinden sich die Gehäuse unter dem Druck, der von der Wasserleitung gefördert wird. Ein zusätzliches Einblasen von Druckluft ist nicht mehr notwendig.

Durch das Einwirken von heißem Wasser mit einer Temperatur von mindestens 60 °C können Schmutzstoffe, in der Hauptsache Kolloide, vom Filtermedium abgelöst werden. Daher wird ein Einwirken über Nacht nach dem "Produktionsende" empfohlen und eventuell eine Reinigung, um die abgelösten Stoffe aus dem Gehäuse zu spülen. Nachdem die Einwirkungszeit abgelaufen ist, startet die Sequenz "Entleeren Wasser" und die Vorrichtung 1 befindet sich wieder im "Stand-by"-Modus.

### Nachfolgend wird beispielhaft der Verfahrensablauf "Chemisches Reinigen" beschrieben:

Das Starten des Programms "Chemisches Reinigen" setzt eine Sicherheitssperre, so dass erst nach dem vollständigen Ablauf des Programms "Chemisches Reinigen" das FILTRIEREN wieder möglich ist. Dies soll verhindern, dass nach einer Unterbrechung des chemischen Reinigens die Anlage in Filtration gehen kann, ohne dass das Reinigungsmittel vorher gründlich aus dem Gehäuse entfernt wurde. Falls es zu einer Unterbrechung kam, kann diese Sicherheitssperre auch durch eine Durchführung der Sequenz "Reinigen (einzel)" wieder aufgehoben werden.

Wird der Steuerungsbefehl "Chemisches Reinigen" nur für einen bestimmten Filter gewählt, beispielsweise durch manuelles Auslösen am Bedientableau, öffnen sich das zu diesem Filter gehörende Wasserauslaßventil auf der Filtratseite und das Entlüftungsventil. Auf dem Display erscheint die Meldung: "Abwasserleitungen abtrennen und Reinigungsleitungen anschließen." Die Zuleitung und Ableitung für das Reinigungsmittel werden an den entsprechenden Stellen an dem Ventil angeschlossen. Nach der Quittierung erfolgt eine neue Meldung:
"Reinigungspumpe einschalten."

Diese Reinigungspumpe wird nicht von der Steuerung der Vorrichtung 1 kontrolliert und ist damit auch kein direkter Bestandteil der Vorrichtung 1. Sie wird vom Betreiber der Vorrichtung 1 bereitgestellt und manuell bedient. Nach dem Einschalten der Reinigungspumpe und der Quittierung der Meldung überwacht die Steuerung das Erreichen des erforderlichen Füllstands. Ist der Füllstand erreicht, schließt das Entlüftungsventil und das Auslaßventil öffnet. Das Reinigungsmittel wird nun "im Kreis" gefördert. Nachdem die eingestellte Reinigungszeit abgelaufen ist, erfolgt eine entsprechende Meldung. Nach der Quittierung schließt sich eine weitere Meldung "Reinigungspumpe ausschalten!" an. Nach nochmaliger Quittierung erscheint die Meldung: "Abwasserleitungen wieder anschließen". Diese Absicherung durch zu quittierende Meldungen führt den Benutzer sicher durch den Ablauf der Programmsequenz "Chemisches Reinigen". Nach der Quittierung der letzten Meldung, wird das Gehäuse mit dem chemisch gereinigten Filter automatisch entleert und es schließt sich die Sequenz "Reinigen" an. Durch die vollständige Durchführung der Sequenz "Reinigen" wird die Sicherheitssperre wieder aufgehoben. Nach der Sequenz "Reinigen" wird das Gehäuse wieder entleert und die Anlage zeigt den "Stand-by" Status an.

## Patentansprüche

1. Verfahren zum Filtrieren von Flüssigkeiten, insbesondere Getränken, mit einer Filtriervorrichtung (1), die mindestens zwei parallele Filterlinien (2, 3) aufweist, und jede Filterlinie (2, 3) mindestens eine Filtereinheit (4, 5, 6, 7) mit mindestens einem Vorfilter (4, 5) und einem Endfilter (6, 7) aufweist, die unabhängig voneinander in die jeweilige Filterlinie (2, 3) hinein- und herausschaltbar und unabhängig voneinander regenerierbar sind, wobei
• an mindestens einer Filtereinheit (4, 5, 6, 7) jeder Filterlinie (2, 3) die auftretende Druckdifferenz gemessen wird,
**dadurch gekennzeichnet, daß**
• beim Erreichen eines vorgebbaren Grenzwertes für die Druckdifferenz der in die Vorrichtung (1) eintretende Volumenstrom reduziert wird,
• die zugehörige Filtereinheit (4) aus der Filterlinie (2) herausgeschaltet wird, wobei der reduzierte zu filtrierende Volumenstrom von der entsprechenden Filtereinheit (5) in der anderen Filterlinie (3) übernommen wird, die mit der einen Filterlinie (2) zwischen dem jeweiligen Vorfilter (4,5) und dem jeweiligen Endfilter (6,7) fluidführend verbunden ist,
• die herausgeschaltete Filtereinheit (4) regeneriert wird,
• anschließend die durch Regenerieren gereinigte Filtereinheit (4) wieder in die Filterlinie (2) hineingeschaltet wird, und
• abschließend der in die Vorrichtung (1) eintretende Volumenstrom wieder erhöht wird.

2. Verfahren nach Anspruch 1, **dadurch gekennzeichnet, dass** vor dem abschließenden Erhöhen des in die Vorrichtung (1) eintretenden Volumenstroms die zur regenerierten Filtereinheit (4) korrespondierende Filtereinheit (5) in der anderen Filterlinie (3) ebenfalls regeneriert wird.

3. Verfahren nach Anspruch 1 oder 2, **dadurch gekennzeichnet, dass** das Regenerieren mit Wasser mit einer Temperatur von mehr als 60 °C erfolgt.

4. Verfahren nach einem der Ansprüche 1 bis 3, **dadurch gekennzeichnet, dass** die Anströmgeschwindigkeit der Filtereinheit (4, 5, 6, 7) beim Regenerieren gleich oder größer ist als beim Filtrieren.

5. Verfahren nach einem der Ansprüche 1 bis 4, **dadurch gekennzeichnet, dass** auch beim Rückspülen die Druckdifferenz an der Filtereinheit (4, 5, 6, 7) gemessen wird.

6. Verfahren nach einem der Ansprüche 1 bis 5, **dadurch gekennzeichnet, dass** die Partikelkonzentration der zu filtrierenden Flüssigkeit bestimmt wird und dementsprechend der in die Vorrichtung (1) eintretende Volumenstrom eingestellt wird.

7. Verfahren nach Anspruch 6, **dadurch gekennzeichnet, dass** die Partikelkonzentration über die gemessene Trübung der zu filtrierenden Flüssigkeit bestimmt wird.

8. Verfahren nach einem der Ansprüche 1 bis 7, **dadurch gekennzeichnet, dass** der in die Vorrichtung (1) eintretende Volumenstrom kontinuierlich oder schrittweise in Abhängigkeit der Filtrierbarkeit der zu filtrierenden Flüssigkeit eingestellt wird.

9. Verfahren nach einem der Ansprüche 1 bis 8, **dadurch gekennzeichnet, dass** der in die Vorrichtung (1) eintretende Volumenstrom mittels einer Pumpe (17) eingestellt wird.

10. Verfahren nach einem der Ansprüche 1 bis 9, **dadurch gekennzeichnet, dass** das Hinein- und Herausschalten der Filtereinheiten (4, 5, 6, 7) aus den jeweiligen Filterlinien (2, 3) und das Einstellen des in die Vorrichtung (1) eintretenden Volumenstroms automatisch von einer Steuereinrichtung (15) gesteuert wird.

11. Vorrichtung zum Filtrieren von Flüssigkeiten, insbesondere Getränken, die mindestens zwei parallele Filterlinien (2, 3) aufweist, und jede Filterlinie (2, 3) mindestens eine Filtereinheit (4, 5, 6, 7) mit mindestens einem Vorfilter (4, 5) und einem Endfilter (6, 7) aufweist, die unabhängig voneinander in die jeweilige Filterlinie (2, 3) hinein- und herausschaltbar und unabhängig voneinander regenerierbar sind, wobei
• an mindestens einer Filtereinheit (4, 5, 6, 7) jeder Filterlinie (2, 3) die auftretende Druckdifferenz mit einem Drucksensor (13, 14) meßbar ist,
**dadurch gekennzeichnet, daß**
• beim Erreichen eines vorgebbaren Grenzwertes für die Druckdifferenz der in die Vorrichtung (1) eintretende Volumenstrom von einer Steuereinrichtung (15) reduzierbar ist,
• die zugehörige Filtereinheit (4) von der Steuereinrichtung (15) aus der Filterlinie (2) herausschaltbar ist, wobei der reduzierte zu filtrierende Volumenstrom von der entsprechenden Filtereinheit (5) in der anderen Filterlinie (3) übernommen wird, die mit der einen Filterlinie (2) zwischen dem jeweiligen Vorfilter (4,5) und dem jeweiligen Endfilter (6,7) fluidführend verbunden ist,
• die herausgeschaltete Filtereinheit (4) von der Steuereinrichtung (15) gesteuert regenerierbar ist,
• anschließend die durch Regenerieren gereinigte Filtereinheit (4) wieder in die Filterlinie (2) hineinschaltbar ist, und
• abschließend der in die Vorrichtung (1) eintretende Volumenstrom von der Steuereinrichtung (15) wieder erhöht wird.

12. Vorrichtung nach Anspruch 11, **dadurch gekennzeichnet, dass** die Filtereinheiten (4, 5, 6, 7) der Filterlinien (2, 3) untereinander über entsprechende Ventile wahlweise miteinander verschaltbar sind.

13. Vorrichtung nach Anspruch 11 oder 12, **dadurch gekennzeichnet, dass** die Steuereinrichtung (15) mittels einer Pumpe (17) den in die Vorrichtung (1) eintretenden Volumenstrom einstellt.

14. Vorrichtung nach einem der Ansprüche 11 bis 13, **dadurch gekennzeichnet, dass** die Partikelkonzentration der zu filtrierenden Flüssigkeit mittels eines entsprechenden Sensors ermittelbar ist, insbesondere mittels eines die Trübung der zu filtrierenden Flüssigkeit messenden optischen Sensors (16).

15. Vorrichtung nach einem der Ansprüche 11 bis 14, **dadurch gekennzeichnet, dass** die Filtereinheiten (4, 5, 6, 7) gewickelte oder plissierte Filterkerzen (20, 26) sind, insbesondere Tiefenfilterkerzen.

## Claims

1. A process for filtering fluids, especially drinks, with a filtering device (1) which has at least two parallel filter lines (2, 3), each filter line (2, 3) having at least one filter unit (4, 5, 6, 7) with at least one prefilter (4, 5) and one end filter (6, 7), which can be individually switched into and out of the respective filter line and can be regenerated independent of each other, whereby
- the pressure differential which occurs is measured at least at one filter unit (4, 5, 6, 7) of each filter line (2, 3),
**characterised in that**
- the volumetric flow entering the device (1) is reduced when a specified pressure differential limit is reached,
- the pertinent filter unit (4) is switched out of the filter line (2), whereby the reduced volumetric flow which is to be filtered is taken over by the respective filter unit (5) in the other filter line (3) which is hydraulically connected to the filter line (2) between the respective prefilter (4, 5) and the respective end filter (6, 7),
- the filter unit (4), switched out of the line, is regenerated,
- the filter unit (4), cleaned by regeneration, is subsequently switched back into the filter line (2) and
- the volumetric flow entering the device (1) is finally increased again.

2. A process according to Claim 1, **characterised in that** the filter unit (5) in the other filter line (3) corresponding to the regenerated filter unit (4) is also regenerated before the volumetric flow entering the device (1) is finally increased.

3. A process according to Claim 1 or 2, **characterised in that** the filters are regenerated with water at a temperature of more than 60°C.

4. A process according to one of the Claims 1 to 3, **characterised in that** the flooding rate of the filter unit (4, 5, 6, 7) during regeneration is equal to or greater than during filtering.

5. A process according to one of the Claims 1 to 4, **characterised in that** the pressure differential is measured at the filter unit (4, 5, 6, 7) also during back-flushing.

6. A process according to one of the Claims 1 to 5, **characterised in that** the concentration of particles in the fluid to be filtered is determined and the volumetric flow entering the device (1) is set accordingly.

7. A process according to Claim 6, **characterised in that** the particle concentration is determined by clouding of the fluid which is to be filtered.

8. A process according to one of the Claims 1 to 7, **characterised in that** the volumetric flow entering the device (1) is set at a continuously variable rate or in steps, depending on the filterability of the fluid which is to be filtered.

9. A process according to one of the Claims 1 to 8, **characterised in that** the volumetric flow entering the device (1) is set by means of a pump (17).

10. A process according to one of the Claims 1 to 9, **characterised in that** the switching of the filter units (4, 5, 6, 7) into and out of the respective lines (2, 3) and the setting of the volumetric flow entering the device (1) is controlled automatically by a control device (15).

11. A device for filtering fluid, especially drinks, which has at least two parallel filter lines (2, 3) and each filter line (2, 3) having at least one filter unit (4, 5, 6, 7) with at least one prefilter (4, 5) and one end filter (6, 7) which can be switched into and out of the respective filter line (2, 3) independent of each other and can be regenerated independent of each other, whereby
- the pressure differential which occurs can be measured with a pressure sensor (13, 14),
**characterised in that**
- the volumetric flow entering the device (1) can be reduced by a control unit (15) when a specified limit is reached,
- the pertinent filter unit (4) is switched out of the filter line (2) by the control unit (15), whereby the reduced volumetric flow which is to be filtered is taken over by the respective filter unit (5) in the other filter line (3) which is hydraulically connected to the filter line (2) between the respective prefilter (4, 5) and the respective end filter (6, 7),
- the filter unit (4), switched out of the line, can be regenerated under the control of the control unit (15),
- the filter unit (4), cleaned by regeneration, can subsequently be switched back into the filter line (2) and
- the volumetric flow entering the device (1) is finally increased again by the control unit (15).

12. A device according to Claim 11, **characterised in that** the filter unit (4, 5, 6, 7) in the filter lines (2, 3) can be optionally interconnected or connected with each other via the appropriate valves.

13. A device according to Claim 11 or 12, **characterised in that** the control device (15) sets the volumetric flow entering the device (1) by means of a pump (17).

14. A device according to one of the Claims 11 to 13, **characterised in that** the concentration of particles in the fluid which is to be filtered can be determined by means of a suitable sensor, especially by means of an optical sensor (16) measuring the clouding of the fluid which is to be filtered.

15. A device according to one of the Claims 11 to 14, **characterised in that** the filter units (4, 5, 6, 7) are wound or pleated filter candles (20, 26), especially filter-medium candles.

## Revendications

1. Procédé pour le filtrage de fluides, en particulier de boissons, avec un dispositif de filtration (1), qui présente au moins deux lignes filtrantes parallèles (2, 3), et chaque ligne filtrante (2, 3) présente au moins une unité filtrante (4, 5, 6, 7) avec au moins un filtre préparatoire (4, 5) et un filtre terminal (6, 7), qui sont intercalables et retirables indépendamment les uns des autres dans chaque ligne filtrante (2, 3) et régénérables indépendamment les uns des autres,
- la différence de pression générée étant mesurée au niveau d'au moins une unité filtrante (4, 5, 6, 7) de chaque ligne filtrante (2, 3),
**caractérisé en ce que**
- en cas d'atteinte d'une valeur limite prédéterminée pour la différence de pression, le débit volumétrique introduit dans le dispositif (1) est réduit,
- l'unité filtrante (4) correspondante est retirée de la ligne filtrante (2), le débit volumétrique à filtrer réduit étant pris en charge par l'unité filtrante (5) correspondante dans l'autre ligne filtrante (3), qui est reliée en conduisant le fluide à l'une des lignes filtrantes (2) entre le filtre préparatoire (4, 5) respectif et le filtre terminal (6, 7) respectif,
- l'unité filtrante (4) retirée est régénérée,
- puis l'unité filtrante (4) épurée par régénération est de nouveau intercalée dans la ligne filtrante (2), et
- enfin, le débit volumétrique introduit dans le dispositif (1) est de nouveau augmenté.

2. Procédé selon la revendication 1, **caractérisé en ce qu'**avant l'accroissement final du débit volumétrique introduit dans le dispositif (1), l'unité filtrante (5) correspondant à l'unité filtrante (4) à régénérer est également régénérée dans l'autre ligne filtrante (3).

3. Procédé selon l'une quelconque des revendications 1 ou 2, **caractérisé en ce que** la régénération se fait avec de l'eau à une température supérieure à 60°C.

4. Procédé selon l'une quelconque des revendications 1 à 3, **caractérisé en ce que** la vitesse de courant de l'unité filtrante (4, 5, 6, 7) pour la régénération est égale ou supérieure à celle pour le filtrage.

5. Procédé selon l'une quelconque des revendications 1 à 4, **caractérisé en ce que** la différence de pression est mesurée au niveau de l'unité filtrante (4, 5, 6, 7) également en cas de rétrolavage.

6. Procédé selon l'une quelconque des revendications 1 à 5, **caractérisé en ce que** la concentration en particules du fluide à filtrer est déterminée et que le débit volumétrique introduit dans le dispositif (1) est ajusté en conséquence.

7. Procédé selon la revendication 6, **caractérisé en ce que** la concentration en particules concernant la turbidité mesurée du fluide à filtrer est déterminée.

8. Procédé selon l'une quelconque des revendications 1 à 7, **caractérisé en ce que** le débit volumétrique introduit dans le dispositif (1) est ajusté en continu ou progressivement en fonction de la filtrabilité du fluide à filtrer.

9. Procédé selon l'une quelconque des revendications 1 à 8, **caractérisé en ce que** le débit volumétrique introduit dans le dispositif (1) est ajusté au moyen d'une pompe (17).

10. Procédé selon l'une quelconque des revendications 1 à 9, **caractérisé en ce que** l'intercalation et le retrait des unités filtrantes (4, 5, 6, 7) à partir des lignes filtrantes (2, 3) respectives ainsi que l'ajustement du débit volumétrique introduit dans le dispositif (1) sont contrôlés automatiquement par un dispositif de commande (15).

11. Dispositif pour le filtrage de fluides, en particulier de boissons, avec un dispositif de filtration (1), qui présente au moins deux lignes filtrantes parallèles (2, 3), et chaque ligne filtrante (2, 3) présente au moins une unité filtrante (4, 5, 6, 7) avec au moins un filtre préparatoire (4, 5) et un filtre terminal (6, 7), qui sont intercalables et retirables indépendamment les uns des autres dans chaque ligne filtrante (2, 3) et régénérables indépendamment les uns des autres,
- la différence de pression générée étant mesurable avec un capteur de pression (13, 14) au niveau d'au moins une unité filtrante (4, 5, 6, 7) de chaque ligne filtrante (2, 3),
**caractérisé en ce que**
- en cas d'atteinte d'une valeur limite prédéterminée pour la différence de pression, le débit volumétrique introduit dans le dispositif (1) est réductible par un dispositif de commande (15),
- l'unité filtrante (4) correspondante est retirable de la ligne filtrante (2) par le dispositif de commande (15), le débit volumétrique à filtrer réduit étant pris en charge par l'unité filtrante (5) correspondante dans l'autre ligne filtrante (3), qui est reliée en conduisant le fluide à l'une des lignes filtrantes (2) entre le filtre préparatoire (4, 5) respectif et le filtre terminal (6, 7) respectif,
- l'unité filtrante (4) retirée est régénérable par le dispositif de commande (15),
- puis l'unité filtrante (4) épurée par régénération est de nouveau intercalée dans la ligne filtrante (2), et
- enfin, le débit volumétrique introduit dans le dispositif (1) est de nouveau augmenté par le dispositif de commande (15).

12. Dispositif selon la revendication 11, **caractérisé en ce que** les unités filtrantes (4, 5, 6, 7) des lignes filtrantes (2, 3) sont interchangeables au choix entre elles via des vannes correspondantes.

13. Dispositif selon l'une quelconque des revendications 11 ou 12, **caractérisé en ce que** le dispositif de commande (15) ajuste le débit volumétrique introduit dans le dispositif (1) au moyen d'une pompe (17).

14. Dispositif selon l'une quelconque des revendications 11 ou 13, **caractérisé en ce que** la concentration en particules du fluide à filtrer est déterminable au moyen d'un capteur correspondant, en particulier au moyen d'un capteur optique (16) mesurant la turbidité du fluide à filtrer.

15. Dispositif selon l'une quelconque des revendications 11 ou 14, **caractérisé en ce que** les unités filtrantes (4, 5, 6, 7) sont des bougies filtrantes (20, 26) enroulées ou plissées, en particulier des bougies filtrantes à lit profond.
